(19) **Europäisches Patentamt**
**European Patent Office**
**Office européen des brevets**

(11) **EP 2 951 069 B1**

(12) **FASCICULE DE BREVET EUROPEEN**

(45) Date de publication et mention
de la délivrance du brevet:
**25.01.2017 Bulletin 2017/04**

(21) Numéro de dépôt: **14705852.3**

(22) Date de dépôt: **30.01.2014**

(51) Int Cl.:
*B60W 20/13* (2016.01)   *B60W 20/14* (2016.01)
*B60W 20/19* (2016.01)   *B60W 10/06* (2006.01)
*B60W 10/08* (2006.01)   *B60W 10/26* (2006.01)

(86) Numéro de dépôt international:
**PCT/FR2014/050171**

(87) Numéro de publication internationale:
**WO 2014/118470 (07.08.2014 Gazette 2014/32)**

(54) **PROCEDE DE LIMITATION ENERGETIQUE DU COUPLE D'ASSISTANCE A L'ACCELERATION D'UN VEHICULE HYBRIDE**

VERFAHREN ZUR REDUZIERUNG DER ENERGIE DES BESCHLEUNIGUNGSDREHMOMENTS EINES HYBRIDFAHRZEUGS

METHOD FOR REDUCING THE ENERGY OF THE ACCELERATION-BOOSTING TORQUE OF A HYBRID VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.01.2013 FR 1350810**

(43) Date de publication de la demande:
**09.12.2015 Bulletin 2015/50**

(73) Titulaire: **Renault S.A.S.**
**92100 Boulogne-Billancourt (FR)**

(72) Inventeurs:
• **LE ROY, Loïc**
**92350 Le Plessis Robinson (FR)**
• **RUEL, Jean-Martin**
**75014 Paris (FR)**

(56) Documents cités:
**EP-A1- 1 428 711**

**Description**

La présente invention concerne le domaine technique des véhicules hybrides, et plus précisément celui de leur gestion énergétique.

Elle a pour objet un procédé de limitation du couple d'assistance à l'accélération d'un véhicule hybride équipé d'un groupe motopropulseur comprenant au moins un moteur thermique et une machine de traction, susceptibles de fournir ensemble ou séparément un couple à la roue, sous le contrôle de lois de gestion optimisant la consommation énergétique du véhicule, et d'une batterie de traction apte à récupérer sous forme d'énergie électrique au moins une partie de l'énergie cinétique du véhicule en décélération, et rechargeable via le moteur thermique.

Lorsque l'énergie de la batterie d'un véhicule hybride est mise à disposition de toutes les prestations du véhicule, sans gestion de priorité, ni limitation d'usage, l'utilisation du véhicule est limitée par la capacité de stockage des batteries. C'est notamment le cas pour les véhicules non rechargeables sur le réseau électrique, dits « mild-hybrid », dont la capacité énergétique embarquée reste encore assez faible actuellement.

Sans limitation énergétique de sa réponse, le système de contrôle du groupe motopropulseur réalise toujours la demande de couple du conducteur, au risque de vider intégralement la batterie de traction. Lorsque les possibilités de rechargement de la batterie se limitent à la récupération partielle d'énergie cinétique en décélération, elles sont réduites et lentes, même si la batterie est aussi rechargeable par le moteur thermique. Ainsi, un utilisateur relativement "actif", épuisera rapidement la batterie, sans réduire sa consommation, sa conduite « sportive » écartant les gains de consommation inhérents aux véhicules hybrides. Or la réduction de la consommation énergétique est un objectif prioritaire des véhicules hybrides.

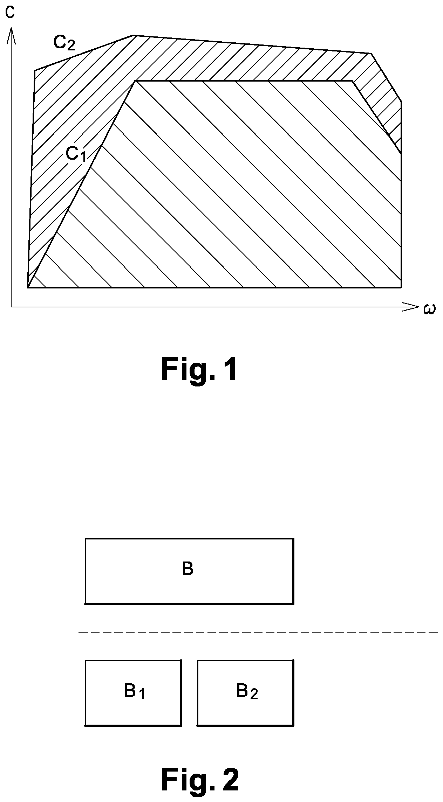

Une prestation particulièrement appréciée des véhicules hybrides est la possibilité de fournir plus de couple à la roue, avec l'assistance de la machine électrique, que ce que le moteur thermique peut fournir seul. On parle d' « *overtorque* » ou d'assistance en couple électrique. Lorsque le conducteur accélère à fond, le moteur thermique est assisté par la machine électrique fonctionnant en mode « moteur » pour maximiser le couple fourni à la roue. Cette prestation, illustrée par la figure 1, est très consommatrice d'énergie électrique. Elle risque donc de vider rapidement la batterie de traction. Alors, la loi de gestion de l'énergie (LGE) n'a plus la possibilité de s'appliquer pleinement, si bien que la consommation globale du GMP augmente. Cette situation apparaît d'autant plus fréquemment, que la capacité de la batterie est faible. Par la publication FR 2 902 705, on connaît un système micro-hybride pour véhicule automobile, dont le système de pilotage comprend des moyens aptes à définir et autoriser différents modes de fonctionnement, incluant un mode de freinage « récupératif » de la machine électrique tournante et un mode d'assistance en couple de la machine électrique tournante.

Toutefois, il n'est pas prévu de limiter le couple d'assistance à l'accélération mis à la disposition du conducteur, pour optimiser l'utilisation de la batterie de traction.

La publication EP 1 428 711 A1 décrit un dispositif de contrôle d'un véhicule hybride, selon lequel le niveau du couple d'assistance électrique décroît en fonction du niveau de charge de la batterie.

La présente invention vise à contrôler la consommation globale du groupe motopropulseur, y compris les dépenses énergétiques liées à l'assistance en couple, en fonction de ses capacités énergétiques, de manière à ne pas pénaliser le gain de consommation associé au véhicule hybride.

Dans ce but, elle propose que le couple d'assistance électrique disponible pour l'assistance en couple est réduit par un coefficient de limitation compris entre 0 et 1, selon la quantité d'énergie restante dans une plage énergétique de la batterie réservée pour l'assistance en couple, qui est calculée en intégrant la puissance électrique fournie par la machine électrique en assistance en couple.

Un des objets de la présente invention, est ainsi de contrôler l'assistance en couple mise à la disposition du conducteur, pour limiter l'impact de cette prestation sur l'optimisation énergétique du véhicule.

Ces dispositions permettent d'introduire dans la gestion énergétique du véhicule des règles de priorité entre le respect de la demande de couple à la roue du conducteur, et la réduction de la consommation du groupe motopropulseur.

Le mécanisme de contrôle introduit dans la commande gère dynamiquement la quantité d'énergie que l'on souhaite allouer pour améliorer l'accélération. Il continue ainsi à optimiser la consommation, même si le conducteur sollicite régulièrement les performances du groupe motopropulseur.

D'autres caractéristiques et avantages de la présente invention apparaîtront clairement à la lecture de la description suivante d'un mode de réalisation non limitatif de celle-ci, en se reportant aux dessins annexés, sur lesquels :

- la figure 1 montre l'apport en couple de l'assistance électrique en couple sur le couple maximum du moteur thermique,
- la figure 2 illustre le mode de gestion énergétique proposé,
- la figure 3 illustre le calcul de répartition de l'énergie récupérée sur lequel repose ce mode de gestion,
- la figure 4 est un schéma de calcul de l'intégrale limitant l'assistance en couple électrique, et
- la figure 5 illustre la réduction du couple obtenue par rapport à la figure 1.

Dans un véhicule hybride équipé d'un groupe motopropulseur comprenant au moins un moteur thermique et une machine électrique, susceptibles de fournir ensemble ou séparément un couple à la roue, ces deux sources d'énergie sont placées sous le contrôle de lois de gestion (LGE) optimisant la consommation énergétique du véhicule. Une batterie de traction, généralement apte à récupérer sous forme d'énergie électrique au moins une partie de l'énergie cinétique du véhicule en décélération, et rechargeable via le moteur thermique, alimente la machine électrique.

Un véhicule hybride dispose donc d'au moins deux actionneurs capables de fournir du couple à la roue : la demande de couple du conducteur peut ainsi être satisfaite par la somme des couples fournis par la machine électrique et le moteur thermique. Comme indiqué ci-dessus, il est possible d'améliorer la consommation globale d'un groupe motopropulseur (GMP) hybride en optimisant la répartition de couple entre les deux actionneurs, grâce à une loi de gestion énergétique (LGE) appropriée. Toutefois, pour que cette loi puisse jouer pleinement son rôle, la batterie de traction doit disposer en permanence d'une réserve d'énergie suffisante pour appliquer la répartition optimale.

Le couple maximum du groupe motopropulseur est défini à partir du couple maximum fourni par le moteur thermique, auquel vient s'ajouter le sur-couple fourni par la machine électrique. Les courbes $C_1$, $C_2$ de la figure 1 montrent respectivement l'évolution du couple maximum du moteur thermique en fonction de son régime $\omega$, et l'enveloppe de couple maximal disponible à la roue avec l'apport de l'assistance en couple électrique. L'écart entre les deux courbes $C_1$ et $C_2$ représente l'assistance en couple électrique disponible. Afin de maîtriser les dépenses énergétiques du conducteur lors de fortes accélérations, il est proposé de limiter le couple d'assistance électrique disponible, en lui appliquant un coefficient de limitation C, compris entre 0 et 1. Le couple d'assistance électrique disponible pour l'assistance en couple est ainsi réduit par le coefficient de limitation C, selon la quantité restante dans une plage énergétique de la batterie, qui est réservée pour l'assistance en couple. Le coefficient de limitation C est calculé en fonction de l'énergie restante, dans une plage énergétique réservée pour l'assistance en couple. Dans la méthode proposée, on considère en effet que l'énergie stockée dans la batterie de traction B est répartie entre deux plages énergétiques ($B_1$, $B_2$), réservées respectivement à l'application de la loi de gestion de l'énergie du groupe motopropulseur en dehors de l'assistance électrique en couple, et à l'assistance électrique en couple.

La distinction entre les deux plages énergétiques est illustrée par la figure 2 : sa partie supérieure correspond à une représentation physique de la batterie de traction B du véhicule, tandis que sa partie inférieure introduit le mode de contrôle proposé avec la distinction de deux batteries fictives. Une première batterie $B_1$, dont l'énergie est impliquée sans réserve dans la loi de gestion de l'énergie en vue de réduire la consommation globale du GMP, et une seconde batterie $B_2$, réservée à l'assistance en couple.

Pour calculer la quantité d'énergie disponible dans la plage $B_2$, on intègre la puissance déjà fournie par la machine électrique en assistance en couple. La valeur de cette intégrale, nommée $I$, se calcule de la façon suivante :

$$I = \int_T P_{ElecOVT} - \left( P_{ElecRECUP} * K \right),$$

dans laquelle :

$P_{ElecOVT} = \max((P_{GMP} - P_{MAXthermique}){}^*\eta_{Elec};0)$ est la puissance électrique dissipée en assistance en couple, $\eta_{Elec}$ est un rendement électrique global, comprenant le rendement de la machine électrique, de l'onduleur, et de la batterie, $P_{GMP}$ est la puissance demandé au GMP par le conducteur,
$P_{MAXthermique}$ est la puissance maximum que peut fournir le moteur thermique,

$$P_{ElecRECUP} = \min\left( \frac{P_{GMP}}{\eta_{Elec}};0 \right)$$ est la puissance électrique récupérée,

$K$ est un coefficient de pondération calculé en fonction de l'état de charge de la batterie physique, et
$T$ est le temps passé en mission.

Le coefficient $K$ permet d'attribuer l'énergie récupérée par la machine électrique en mode « générateur », soit dans la batterie $B_1$, soit dans la batterie $B_2$.

Lorsque la réserve d'énergie pour l'assistance en couple est pleine, $I = 0$ [Wh]. Lorsque la réserve d'énergie est vide, $I = E_{MAX}$ [Wh], $E_{MAX}$ étant la quantité d'énergie mise à la disposition du conducteur, c'est-à-dire la capacité de la batterie fictive $B_2$.

Si la batterie $B_1$ contient suffisamment d'énergie pour permettre l'optimisation énergétique, alors $K = 1$. Toute l'énergie récupérée est alors attribuée à la batterie $B_2$. Le conducteur peut dépenser l'énergie récupérée, en assistance en couple électrique.

Si la batterie $B_1$ ne contient pas suffisamment d'énergie pour permettre l'optimisation énergétique, alors $K = 0$. Toute l'énergie récupérée est attribuée à la batterie $B_1$ : on la recharge avec l'énergie récupérée, sans allouer d'énergie à la batterie fictive $B_2$ : le conducteur ne bénéficie plus de l'assistance électrique lors de fortes accélérations. On donne ainsi la priorité à la réduction de la consommation, plutôt qu'à la performance du GMP. Le conducteur n'a plus toutes les performances de l'assistance électrique dès lors qu'il a déjà dépensé toute l'énergie allouée à celle-ci.

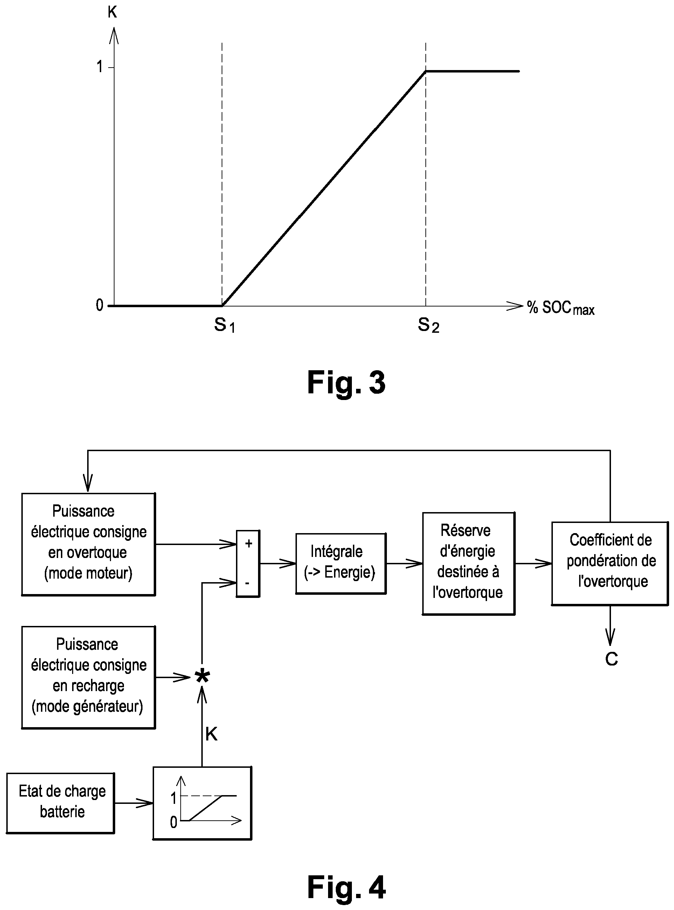

Le coefficient de pondération $K$ définit l'ordre de priorité du stockage d'énergie entre la batterie $B_1$ et la batterie $B_2$, en vue d'améliorer soit la performance, soit la consommation. Le schéma de la figure 3 illustre un mode de détermination non limitatif de $K$, en fonction du pourcentage de charge de la batterie, SOC %. En dessous d'un premier seuil $S_1$, $K$ est nul. Toute l'énergie récupérée dans 1a batterie est consacrée à la loi de gestion de l'énergie LGE. Entre $S_1$ et un deuxième seuil $S_2$ supérieure à celui-ci, $K$ a une croissance linéaire. A partir de $S_2$, $K = 1$, toute l'énergie récupérée dans la batterie est disponible pour l'assistance en couple.

Conformément à la figure 4, la différence entre la première et la deuxième quantité d'énergie, pondérée par le coefficient $K$ fonction de l'état de charge de la batterie SOC, est intégrée. La quantité d'énergie $I$ affectée à la plage énergétique $B_2$ est calculée en intégrant la puissance électrique fournie par la machine électrique en assistance en couple. Cette puissance est calculée par différence entre la puissance électrique effectivement consommée en assistance en couple et la puissance électrique récupérée en décélération ou par la recharge via le moteur thermique. La puissance électrique récupérée est ainsi pondérée par le coefficient de pondération $K$, calculé en fonction de l'état de charge de la batterie de traction.

La valeur de l'intégrale $I$, correspondant à la réserve d'énergie réservée à l'assistance électrique, permet d'obtenir par cartographie, le coefficient de limitation C, limitant l'assistance électrique, qui est renvoyé en boucle sur la consigne de puissance électrique disponible en assistance en couple.

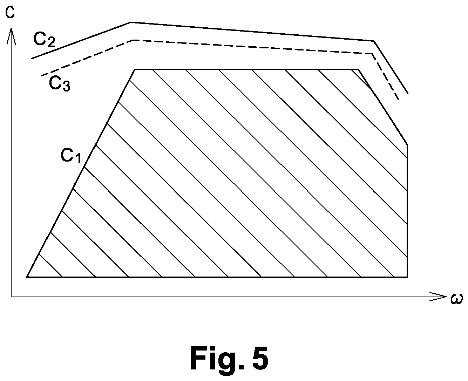

La figure 5 introduit la limitation de la puissance disponible pour l'assistance sur la figure 1. Sur cet exemple, on distingue l'enveloppe de couple maximal disponible à la roue avec l'apport de l'assistance en couple électrique sans pondération (courbe $C_2$) et l'assistance en couple électrique disponible avec une limitation de l'ordre de 20% (courbe $C_3$).

Comme indiqué plus haut, lorsque l'intégrale $I$ atteint $E_{MAX}$, le couple électrique en assistance en couple devient nul. L'exemple suivant illustre la mise en oeuvre du procédé à partir de plusieurs exemples.

Dans une première situation, avec une intégrale $I$ (batterie fictive $B_2$) de 30Wh, et une batterie physique B rechargée de 30Wh, on considère son état de charge (SOC) est élevé, $K = 1$. La loi de gestion de l'énergie (LGE) dispose de suffisamment d'énergie pour optimiser la consommation. Les 30Wh récupérés peuvent être affectés à la batterie fictive $B_2$, pour être dépensés intégralement en assistance.

Dans une deuxième situation, avec une même valeur d'intégrale I 30Wh de $B_2$, on a un état de charge de batterie physique faible, plaçant par exemple le coefficient $K$ à 0,33). La LGE ne dispose pas suffisamment d'énergie pour optimiser la consommation. 20Wh des 30Wh de la batterie fictive sont alloués à la LGE (batterie $B_1$) en déchargeant la batterie fictive de seulement 10Wh pour l'assistance (batterie $B_2$).

Dans une troisième situation, avec toujours la même valeur d'intégrale de 30Wh, l'état de charge de batterie physique place le coefficient K à la valeur 0. La LGE ne dispose pas suffisamment d'énergie pour optimiser la consommation. L'intégralité des 30 Wh récupérés va donc lui être allouée (batterie $B_1$), sans attribuer d'énergie à la batterie $B_2$ pour l'assistance.

Les avantages de l'invention sont nombreux :

- elle permet de limiter le couple d'assistance électrique mis à la disposition du conducteur pour faire de fortes accélérations, pour ne pas impacter la gestion de l'énergie, en particulier sur les véhicules hybrides avec peu d'énergie embarquée, et
- elle facilite le typage de le la machine électrique entre des cibles de performance ou de consommation.

**Revendications**

1. Procédé de limitation énergétique du couple d'assistance électrique à l'accélération d'un véhicule hybride équipé d'un groupe motopropulseur comprenant au moins un moteur thermique et une machine électrique susceptibles de fournir ensemble ou séparément un couple à la roue sous le contrôle de lois de gestion *(LGE)* optimisant la consommation énergétique du véhicule, et d'une batterie de traction *(B)* apte à récupérer sous forme d'énergie électrique au moins une partie de l'énergie cinétique du véhicule en décélération, et rechargeable via le moteur thermique, **caractérisé en ce que** le couple d'assistance électrique disponible pour l'assistance en couple est réduit par un coefficient de limitation *(C)* compris entre 0 et 1, selon la quantité d'énergie restante dans une plage énergétique *($B_2$)* de la batterie *(B)* réservée pour l'assistance en couple, qui est calculée en intégrant la puissance électrique fournie par la machine électrique en assistance en couple.

**2.** Procédé de limitation énergétique selon la revendication 1, **caractérisé en ce que** l'énergie stockée dans la batterie de traction est répartie entre deux plages énergétiques $(B_1, B_2)$, réservées respectivement à l'application de la loi de gestion de l'énergie *(LGE)* du groupe motopropulseur en dehors de l'assistance électrique en couple, et à l'assistance électrique en couple.

**3.** Procédé de limitation énergétique selon la revendication 2, **caractérisé en ce que** la puissance électrique fournie par la machine électrique en assistance en couple est calculée par différence entre la puissance électrique effectivement consommée en assistance en couple et la puissance électrique récupérée en décélération ou par la recharge via le moteur thermique.

**4.** Procédé de limitation énergétique selon la revendication 3, **caractérisé en ce que** la puissance électrique récupérée en décélération ou par la recharge via le moteur thermique est pondérée par un coefficient de pondération *(K)* calculé en fonction de l'état de charge de la batterie de traction.

**5.** Procédé de limitation énergétique selon la revendication 4, **caractérisé en ce que** le coefficient de pondération *(K)* est nul en dessous d'un premier seuil $(S_1)$ du pourcentage de charge *(SOC%)* de la batterie.

**6.** Procédé de limitation énergétique selon la revendication 5, **caractérisé en ce que** le coefficient *(K)* croît de la valeur 0 jusqu'à la valeur 1, entre le premier seuil $(S_1)$ et un deuxième seuil $(S_2)$ supérieur à $(S_1)$.

**7.** Procédé de limitation énergétique selon l'une des revendications précédentes, **caractérisé en ce que** le coefficient de limitation *(C)* est obtenu par cartographie, à partir de la valeur de l'intégrale *(I)*.

**8.** Procédé de limitation énergétique selon l'une des revendications précédentes, **caractérisé en ce que** le coefficient de limitation *(C)* de l'assistance électrique est renvoyé en boucle sur la consigne de couple d'assistance électrique.

**Patentansprüche**

**1.** Verfahren zur Energiebegrenzung des elektrischen Unterstützungsmoments der Beschleunigung eines Hybridfahrzeugs, das mit einem Antriebsstrang, der mindestens einen Wärmekraftmotor und eine elektrische Maschine enthält, die in der Lage sind, kontrolliert von Management-Gesetzen (LGE), die den Energieverbrauch des Fahrzeugs optimieren, zusammen oder getrennt ein Drehmoment an das Rad zu liefern, und mit einer Traktionsbatterie (B) ausgestattet ist, die mindestens einen Teil der kinetischen Energie des Fahrzeugs bei der Verzögerung in Form elektrischer Energie wiedergewinnen kann und über den Wärmekraftmotor aufladbar ist, **dadurch gekennzeichnet, dass** das für die Momentunterstützung verfügbare elektrische Unterstützungsmoment durch einen Begrenzungskoeffizient (C) reduziert wird, der zwischen 0 und 1 liegt, je nach der verbleibenden Energiemenge in einem für die Momentunterstützung reservierten Energiebereich $(B_2)$ der Batterie (B), der unter Einfügung der von der elektrischen Maschine bei der Momentunterstützung gelieferten elektrischen Leistung berechnet wird.

**2.** Energiebegrenzungsverfahren nach Anspruch 1, **dadurch gekennzeichnet, dass** die in der Traktionsbatterie gespeicherte Energie zwischen zwei Energiebereichen $(B_1, B_2)$ verteilt wird, die für die Anwendung des Management-Gesetzes der Energie (LGE) des Antriebsstrangs außerhalb der elektrischen Momentunterstützung bzw. die elektrische Momentunterstützung reserviert sind.

**3.** Energiebegrenzungsverfahren nach Anspruch 2, **dadurch gekennzeichnet, dass** die von der elektrischen Maschine bei der Momentunterstützung gelieferte elektrische Leistung durch Differenz zwischen der bei der Momentunterstützung tatsächlich verbrauchten elektrischen Leistung und der bei der Verzögerung oder durch die Aufladung durch den Wärmekraftmotor wiedergewonnenen elektrischen Leistung berechnet wird.

**4.** Energiebegrenzungsverfahren nach Anspruch 3, **dadurch gekennzeichnet, dass** die bei der Verzögerung oder durch die Aufladung über den Wärmekraftmotor wiedergewonnene elektrische Leistung durch einen Gewichtungskoeffizient (K) gewichtet wird, der abhängig vom Ladezustand der Traktionsbatterie berechnet wird.

**5.** Energiebegrenzungsverfahren nach Anspruch 4, **dadurch gekennzeichnet, dass** der Gewichtungskoeffizient (K) unter einer ersten Schwelle $(S_1)$ des Ladeprozentsatzes (SOC%) der Batterie Null ist.

**6.** Energiebegrenzungsverfahren nach Anspruch 5, **dadurch gekennzeichnet, dass** der Koeffizient (K) zwischen der

ersten Schwelle ($S_1$) und einer zweiten Schwelle ($S_2$) höher als ($S_1$) vom Wert 0 bis zum Wert 1 ansteigt.

7. Energiebegrenzungsverfahren nach einem der vorhergehenden Ansprüche, **dadurch gekennzeichnet, dass** der Begrenzungskoeffizient (C) durch Kartographieren ausgehend vom Wert des Integrals (I) erhalten wird.

8. Energiebegrenzungsverfahren nach einem der vorhergehenden Ansprüche, **dadurch gekennzeichnet, dass** der Begrenzungskoeffizient (C) der elektrischen Unterstützung auf den elektrischen Unterstützungsmoment-Sollwert zurückgeschleift wird.

**Claims**

1. Method for limiting the energy of the torque for electrically boosting the acceleration of a hybrid vehicle equipped with a power train comprising at least one heat engine and one electric machine capable of jointly or separately supplying a torque to the wheel under the control of management laws *(LGE)* optimizing the energy consumption of the vehicle, and a traction battery (*B*) capable of recovering at least a part of the kinetic energy of the vehicle in deceleration in the form of electrical energy, and that can be recharged via the heat engine, **characterized in that** the electrical boosting torque available for torque boost is reduced by a limiting coefficient (*C*) of between 0 and 1, according to the quantity of the energy remaining within an energy band *($B_2$)* of the battery (*B*), reserved for the torque boost, which is computed by integrating the electrical power supplied by the electrical machine in torque boost mode.

2. Energy limiting method according to Claim 1, **characterized in that** the energy stored in the traction battery is distributed by two energy bands ($B_1$, $B_2$), reserved respectively for the application of the energy management law *(LGE)* of the power train outwith the electrical torque boost, and with the electrical torque boost.

3. Energy limiting method according to Claim 2, **characterized in that** the electrical power supplied by the electrical machine in torque boost mode is computed by the difference between the electrical power effectively consumed in torque boost mode and the electrical power recovered in deceleration or by recharging via the heat engine.

4. Energy limiting method according to Claim 3, **characterized in that** the electrical power recovered in deceleration or by recharging via the heat engine is weighted by a weighting coefficient (K) computed as a function of the state of charge of the traction battery.

5. Energy limiting method according to Claim 4, **characterized in that** the weighting coefficient (*K*) is 0 below a first threshold ($S_1$) of the percentage of charge (*SOC%*) of the battery.

6. Energy limiting method according to claim 5, **characterized in that** the coefficient *(K)* increases from the value 0 to the value 1, between the first threshold ($S_1$) and a second threshold *($S_2$)* higher than ($S_1$).

7. Energy limiting method according to one of the preceeding claims, **characterized in that** the limiting coefficient (*C*) is obtained by mapping, from the value of the integral (*I*).

8. Energy limiting method according to one of the preceding claims, **characterized in that** the limiting coefficient (C) of the electrical boost is returned in a loop on the electrical boost torque setpoint.

**Fig. 1**

**Fig. 2**

Fig. 3

Fig. 4

**Fig. 5**

**EP 2 951 069 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2902705
- EP 1428711 A1